(19) **Europäisches Patentamt / European Patent Office / Office européen des brevets**

(11) **EP 1 773 633 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: **05758413.8**

(22) Anmeldetag: **05.07.2005**

(51) Int Cl.:
**B60T 8/32** (2006.01)

(86) Internationale Anmeldenummer:
**PCT/EP2005/007226**

(87) Internationale Veröffentlichungsnummer:
**WO 2006/007970 (26.01.2006 Gazette 2006/04)**

(54) **BREMSDRUCKMODULATOR-VORSTEUEREINHEIT**

BRAKE PRESSURE MODULATOR PILOT UNIT

BLOC PILOTE DE MODULATEUR DE PRESSION DE FREINAGE

(84) Benannte Vertragsstaaten:
**DE FR GB SE**

(30) Priorität: **21.07.2004 DE 102004035763**

(43) Veröffentlichungstag der Anmeldung:
**18.04.2007 Patentblatt 2007/16**

(73) Patentinhaber: **WABCO GmbH**
**30453 Hannover (DE)**

(72) Erfinder:
• **FRANK, Dieter**
**30171 Hannover (DE)**

• **ROVIRA-RIFATERRA, Juan**
**30827 Garbsen (DE)**
• **SIEKER, Armin**
**33611 Bielefeld (DE)**
• **TEICHMANN, Andreas**
**30916 Isernhagen HB (DE)**

(74) Vertreter: **Günther, Constantin et al**
**WABCO GmbH**
**Postfach 91 12 62**
**30432 Hannover (DE)**

(56) Entgegenhaltungen:
WO-A-03/053758        DE-A1- 4 227 084
DE-A1- 10 113 316

EP 1 773 633 B1

**Beschreibung**

Die Erfindung betrifft eine Ventil-Vorsteuereinheit für einen Bremsdruckmodulator.

Aus der DE 100 09 116 A1 (im weiteren mit D1 bezeichnet) ist eine Ventileinrichtung für die Vorsteuereinheit eines Bremsdruckmodulators für eine elektronisch-pneumatische Bremsanlage (EBS) bekannt. Fig. 2 dieser Schrift zeigt die pneumatische Schaltung für die Vorsteuereinheit eines Bremsregelkreises des Bremsdruckmodulators, bestehend aus einem 3/2-Magnetventil (21) als Redundanzventil, einem stromlos offenen 2/2-Magnetventil (22) als Belüftungsventil und einem stromlos offenen 2/2-Magnetventil (23) als Entlüftungsventil. Wie aus der älteren DE 42 27 084 A1 (Schrift D2, dort Figur 2) bekannt, lässt sich bei dieser Schaltung das Redundanzventil auch für einen zweiten Bremsregelkreis mitverwenden, so dass nach dieser Schaltanordnung eine Vorsteuereinheit für zwei Bremsregelkreise aus einem 3/2-Redundanzventil für beide Kreise und je einem 2/2-Entlüftungs- und 2/2-Belüftungsventil für beide Kreise besteht. Nach dem Stand der Technik sind zur Betätigung der jeweiligen Magnetanker für diese 5 Magnetventile insgesamt 5 Magnetspulen vorgesehen.

In der D1 ist in der Fig. 4 gezeigt, dass sich die Magnetventile nach Fig. 2 mit nur einem hermetisch dichtenden Dichtsitz ausbilden lassen, bei dem bei stromloser Magnetspule durch die Wirkung der Magnetanker-Rückstellfeder (40) ein im entsprechenden Magnetanker (39) vorgesehener Elastomereinsatz (41) an einer ersten Hubbegrenzung mit einem Ventildichtsitz (31) zur Anlage kommt (47 für Ventil vom 3/2-Typ 21, 43 für Ventil vom 2/2-Typ 23, kein Dichtsitz entsprechend 45 für Ventil vom 2/2-Typ 22). Neben diesem Dichtsitz weisen die Magnetventile eine zweite Stellung auf, in der durch die Wirkung der Magnetkraft der entsprechende Magnetanker (39) an eine zweite Hubbegrenzung (34) angelegt ist, an der ein Detail-Metall-Ventilsitz gebildet ist (48 für Ventil vom 3/2-Typ 21, 46 für Ventil vom 2/2-Typ 22, kein Dichtsitz entsprechend 44 für Ventil vom 2/2-Typ 21), der durch die unvermeidlichen Leckagen zwar nicht hermetisch dichtet, was jedoch aufgrund der gewählten Schaltungstechnik ohne Bedeutung für die Funktion des Bremsdruckmodulators ist.

In der DE-OS 24 03 770 (Schrift D3) sind für ein hydraulisches ABS-Magnetventil Maßnahmen zur Beeinflussung der Magnetkräfte offenbart, um in Abhängigkeit vom Magnetstrom drei stabile und reproduzierbare Ankerstellungen, nämlich Stellungen für den stromlosen Zustand, den Zustand für eine "Erregerstufe 1" und den Zustand für eine "Erregerstufe voll" zu erhalten. In der stromlosen Ausgangsstellung des Magnetventils ist das Auslassventil (12/27) geschlossen und das Einlassventil (11/28) ist geöffnet; dadurch ist die Druckquelle (3) mit dem Bremszylinder (2) verbunden und es findet im Bremszylinder ein Druck-Aufbau statt. Bei einer Bestromung entsprechend der Erregerstufe 1 macht der Anker (13) einen kleinen Weg und schließt das Einlassventil (11/28), wodurch der Druck im Bremszylinder (2) gehalten wird. Bei einer Bestromung entsprechend der Erregerstufe voll ist der Anker (13) zum Distanzring (16) verschoben, das Auslassventils (12/27) öffnet und der Druck im Bremszylinder (2) wird abgebaut.

Aus der WO 03/053758 (Schrift D4) ist ein Bremsdruckmodulator für ein Anhängefahrzeug bekannt, bei dem eine Vorsteuereinheit mit vier Ventilen, einem 3/2-Auswahlventil "Vorrat/Entlüftung" (110), einem 3/2-Redundanzventil (109) und zwei 2/2-Modulatorventilen (106, 107) für zwei unterschiedliche Bremsregelkreise verwendet wird. Bei dieser Schrift ist also die Anzahl der Ventile und damit auch die der Ventil-Magneten für zwei Bremsregelkreise auf vier reduziert. Die Vorsteuerungs-Schaltung nach dieser Schrift weist jedoch den Nachteil auf, dass zu einem bestimmten Zeitpunkt nicht einer der beiden Kanäle belüftet und der andere entlüftet werden kann, sondern immer nur beide Kanäle gleichzeitig zu be- oder zu entlüften sind. Auf diese Weise ist es nicht möglich, an einem Kanal den Druck zu erhöhen und gleichzeitig am anderen Kanal den Druck zu verringern, was für eine flexible Regelstrategie von großem Vorteil ist. Ein weiterer Nachteil bei dieser Lösung besteht in der Reihenschaltung der Ventile, durch die der zu erzielende Luftdurchsatz vermindert und die effektive Nennweite der Vorsteuereinheit reduziert wird.

Aus der DE 35 01 708 A1 (Schrift D5) ist ein elektromagnetisch betätigbares Mehrwegeventil bekannt, bei dem zwei unterschiedliche Ventile, ein über einen ersten Anker (5) betätigbares Einlassventil (9, 10) und ein über einen zweiten Anker (21) betätigbares Auslassventil (23, 25) mit nur einer gemeinsamen Spule (2) zu betätigen sind. Die Anker (5) bzw. (21) sind mit unterschiedlich dimensionierten Rückstellfedern, einer schwach dimensionierten Rückstellfeder (13) für Anker (5) und einer stark dimensionierten Rückstellfeder (17) für Anker (21) belastet, so dass sie durch Steuerung des Stroms in der Spule (2) unabhängig voneinander zu betätigen sind. Dieses Ventil lässt sich also grundsätzlich als kombiniertes Belüftungs-/Entlüftungsventil in einem Bremsdruckmodulator verwenden. Das diesem Ventil für die unabhängige Betätigung zugrundeliegende Prinzip der unterschiedlichen Auslegung der Rückstellfedern (13, 17) führt jedoch, wie nachstehend erläutert, zu Schwierigkeiten bei der Ventilauslegung. Die "schwache" Rückstellfeder muss die am Einlass (9, 10) wirkende Gaskraft überwinden können, sie muss also stark genug sein, damit beim Stromabfall die Rückstellfunktion für das Einlassventil (9, 10) gewährleistet ist. Die "starke" Rückstellfeder (17) muss stark genug sein, damit das Auslassventil (23, 25) erst bei deutlich höherem Magnetstrom, als dies beim Einlassventil (9, 10) der Fall ist, einschaltet. Die starke Auslegung der Rückstellfeder (17) ist also auch begrenzt durch das, was der Magnet an Kraft überhaupt zur Verfügung stellen kann. Es ist also zur Realisierung dieses Prinzips auch erforderlich, einen vergleichsweise großen Magneten mit der erforderlichen Magnetkraft bereit zu stellen, und ein solcher Magnet bedingt, neben erhöhten Herstellkosten, auch das zur Verfügung stellen einer höheren elektrischen Leistung, die aufgrund der Baugrößen-bedingten Erhöhung der Massenträgheiten dann aber dennoch nicht zu einer befriedigend kurzen Ventilschaltzeit führt. Die Wahl größerer Baueinheiten wirkt zudem dem Ziel entgegen, kompakte Geräte zu erzeugen.

Der Erfindung liegt also die Aufgabe zugrunde, eine Ventilsteuereinheit entsprechend der erstgenannten Schrift mit dem Ziel verringerter Herstellkosten bei Einhaltung einer kompakten Bauweise weiterzubilden, wobei in der Anwendung der Ventilsteuereinheit als Brensregelungs-Vorsteuereinheit zwei unterschiedliche Bremsregelkanäle unabhängig voneinander zu betätigen sind.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Die erfindungsgemäße Ventilsteuerung weist den Vorteil einer geringen Stromaufnahme aus, woraus sich auch der Vorteil eines günstigen Wärmeverhaltens im Gerät ergibt. Ein weiterer Vorteil der Erfindung ist der verringerte Aufwand bei der Kontaktierung und bei der elektrischen Ansteuerung (Anzahl der benötigten Endstufen mit den dazu gehörenden Bauteilen).

Die Erfindung wird im folgenden anhand eines Ausführungsbeispiels, das in der Zeichnung dargestellt ist, näher erläutert.

Es zeigen:

Fig. 1      die pneumatische Schaltung der erfindungsgemäßen Ventilsteuereinrichtung für zwei Druckregelkanäle, insbesondere als Vorsteuereinheit für eine elektronisch-pneumatische Bremsdruckanlage (EBS);

Fig. 2-8    die Ventil-Schaltzustände der EBS-Vorsteuereinheit in Prinzipdarstellung, im einzelnen:

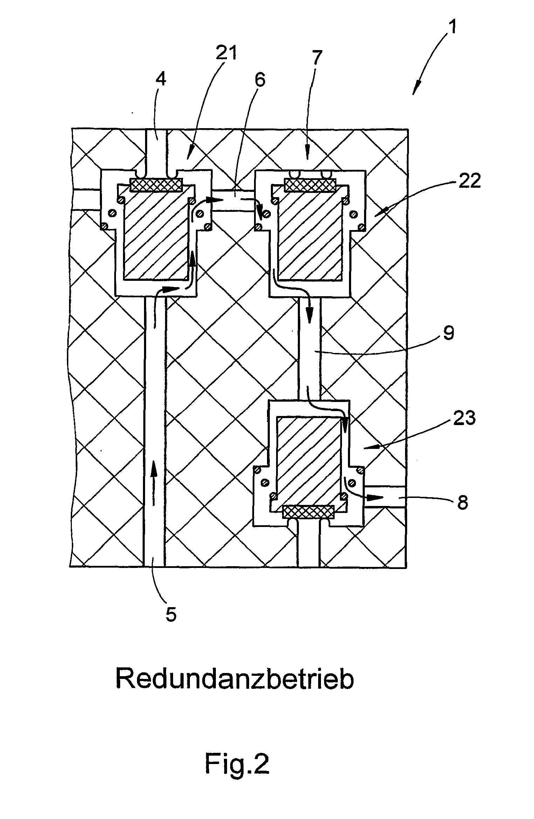

Fig. 2      den Redundanzbetrieb;

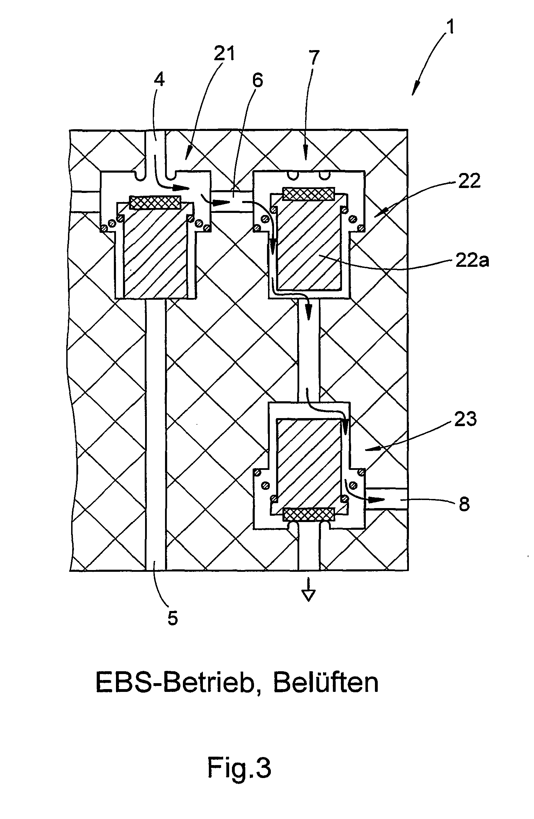

Fig. 3      das Belüften im EBS-Betrieb;

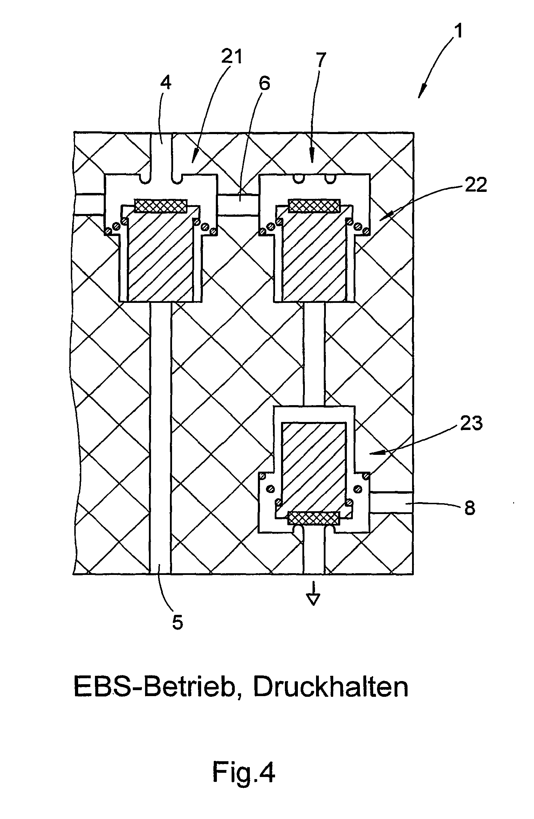

Fig. 4      das Druckhalten im EBS-Betrieb;

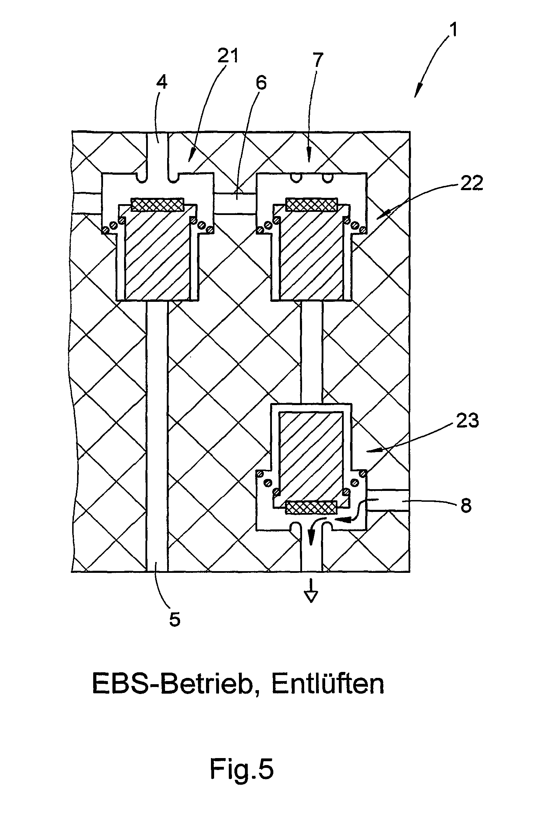

Fig. 5      das Entlüften im EBS-Betrieb;

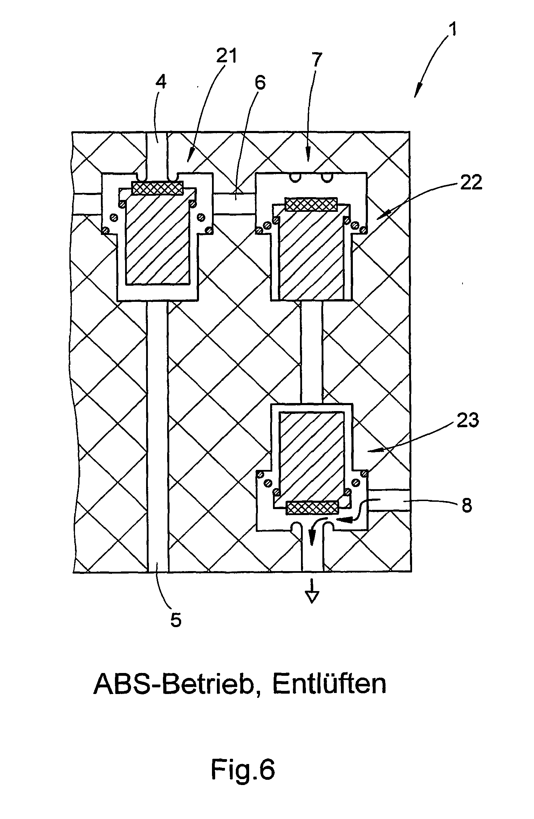

Fig. 6      das Entlüften im Antiblockierbetrieb (ABS-Betrieb);

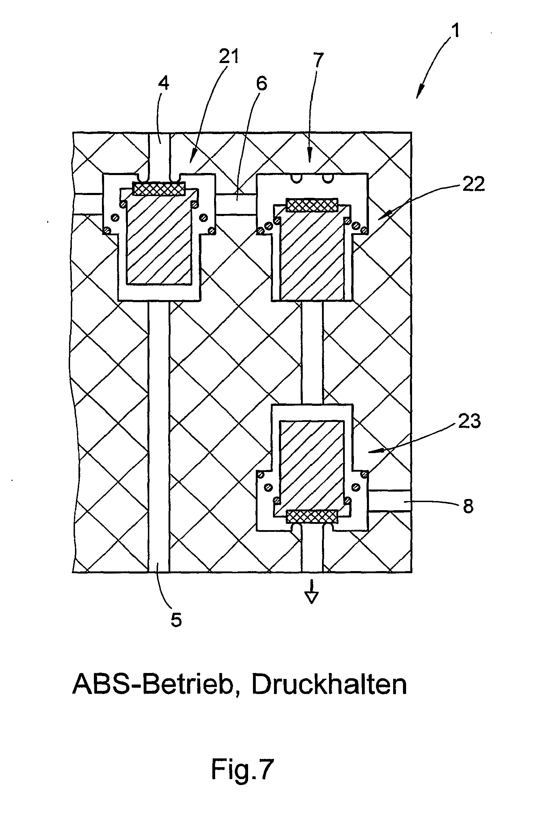

Fig. 7      das Druckhalten im ABS-Betrieb;

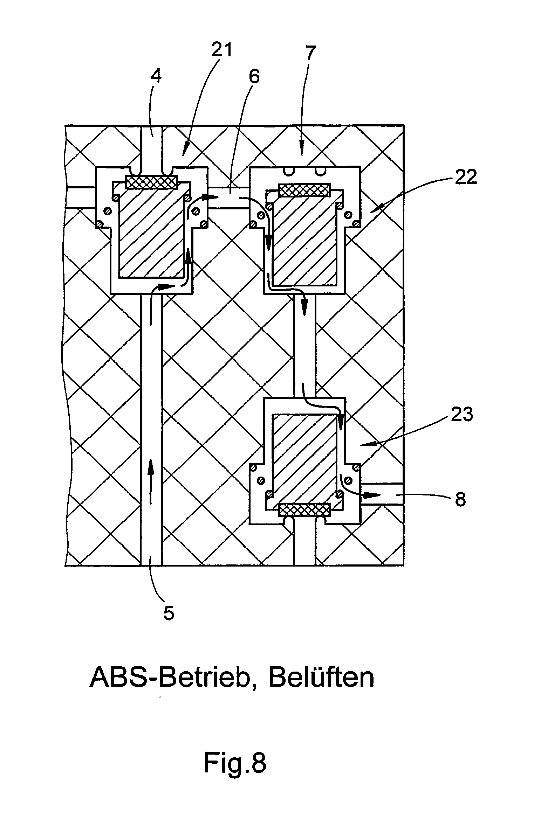

Fig. 8      das Belüften im ABS-Betrieb;

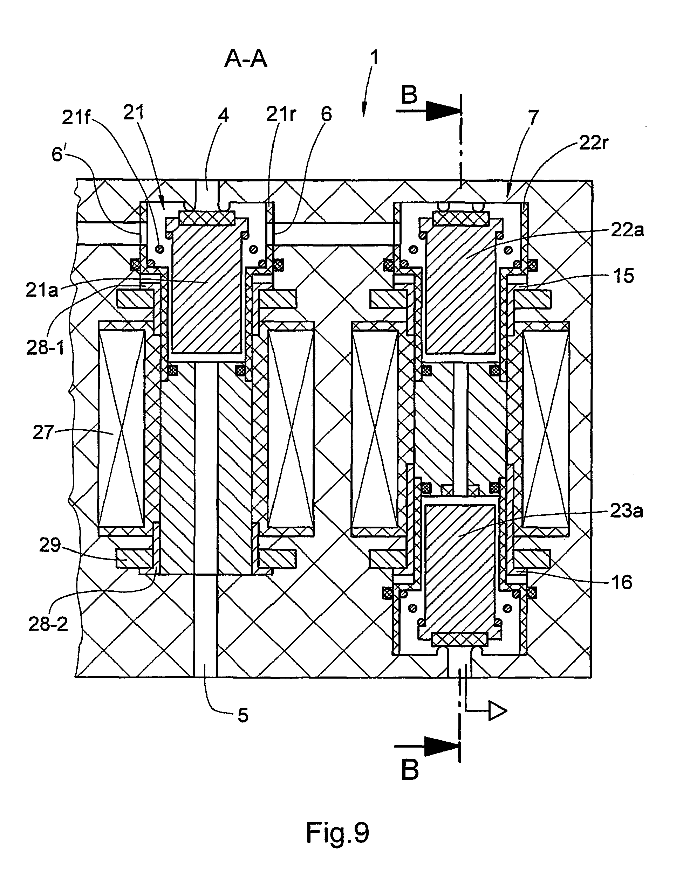

Fig. 9      den konstruktiven Aufbau einer aus einem Belüftungs- und einem Entlüftungsventil aufgebauten Ventil-Modulator-Einrichtung mit einer Magnetspule für beide Ventile als kombinierte Schnittdarstellung mit einem 3/2-Redundanzventil;

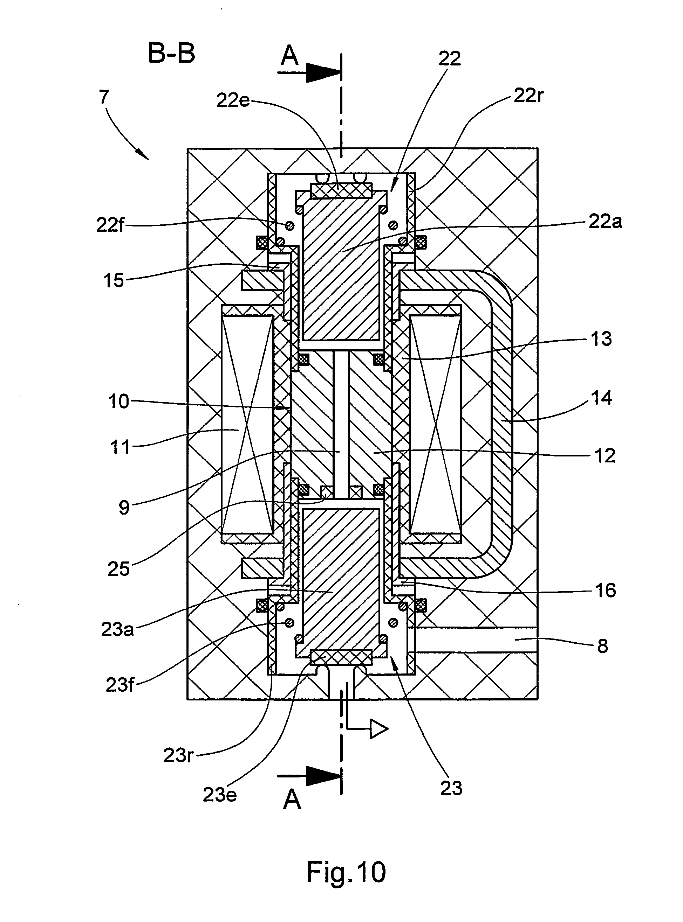

Fig. 10     die Ventil-Modulator-Einrichtung in ihrer ersten Ausführungsform nach Fig. 9 als Einzel-Schnittdarstellung;

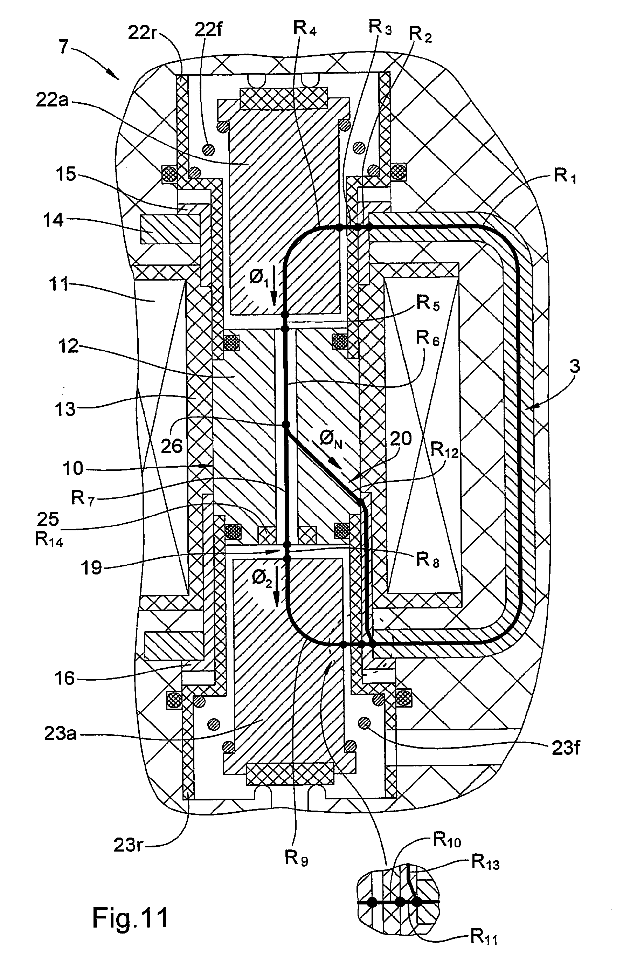

Fig. 11     die Erläuterung eines magnetischen Nebenschlusses in der Ventil-Modulator-Einrichtung nach Fig. 10;

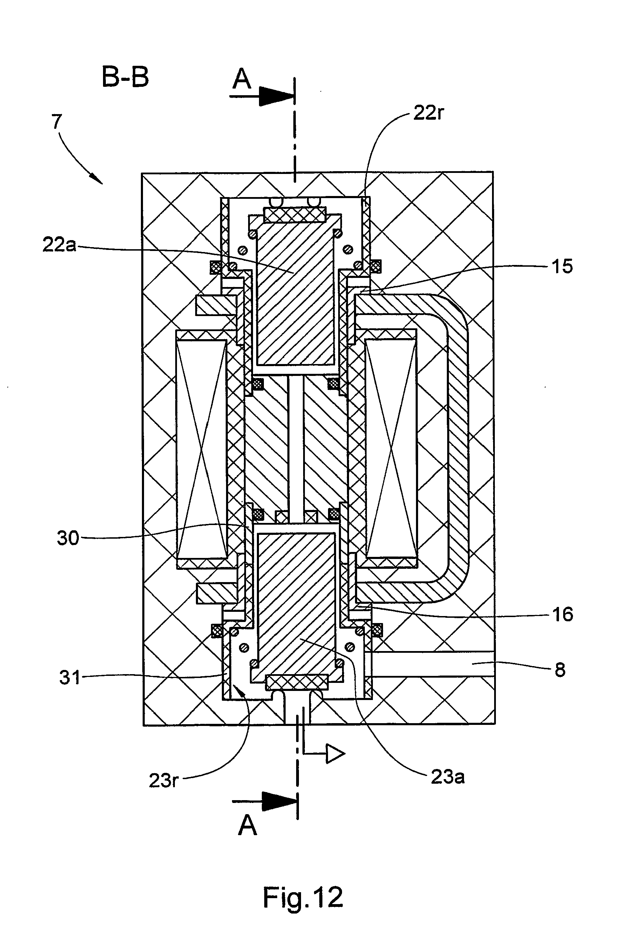

Fig. 12     die Ventil-Modulator-Einrichtung in der Darstellungsart nach Fig. 10 in einer zweiten Ausführungsform;

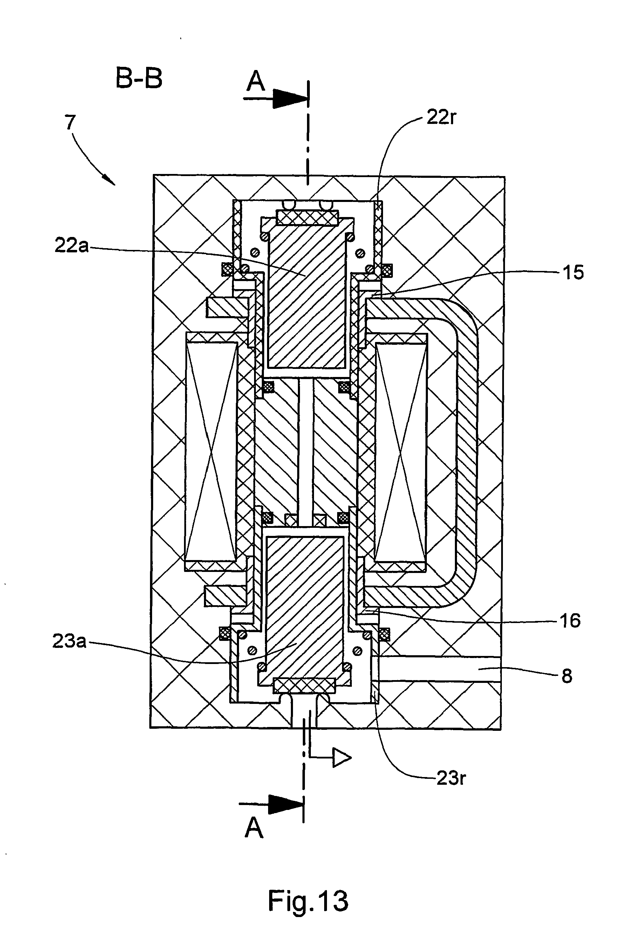

Fig. 13     die Ventil-Modulator-Einrichtung in der Darstellungsart nach Fig. 10 in einer dritten Ausführungsform;

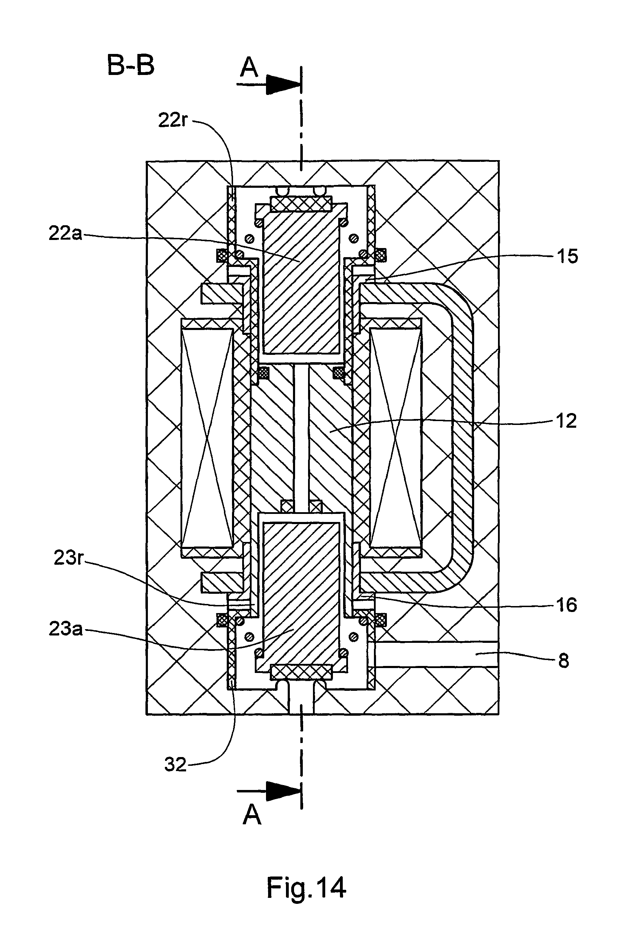

Fig. 14     die Ventil-Modulator-Einrichtung in der Darstellungsart nach Fig. 10 in einer vierten Ausführungsform;

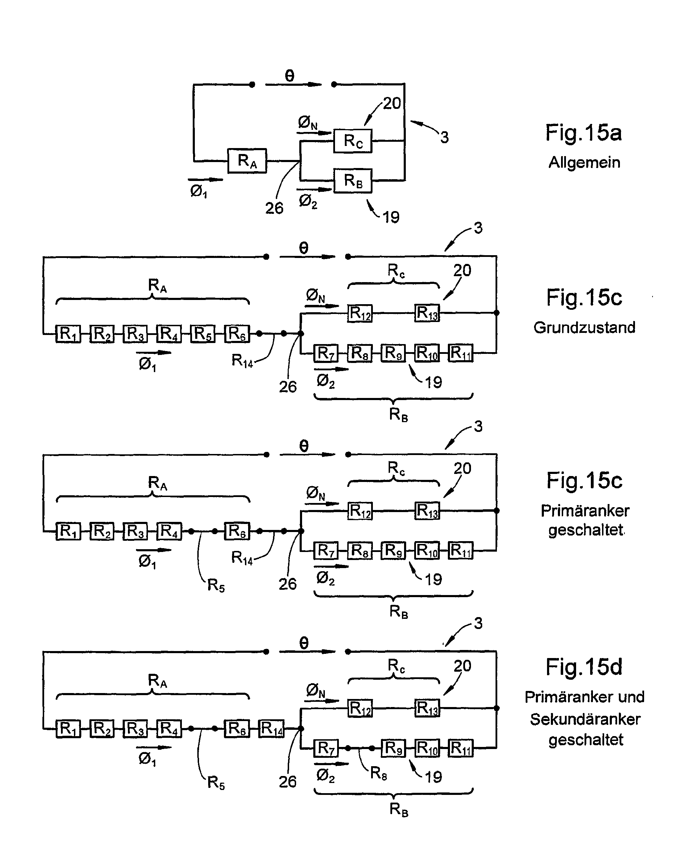

Fig. 15     das Schaltbild des magnetischen Kreises für die Ventil-Modulator-Einrichtung nach Fig. 10;

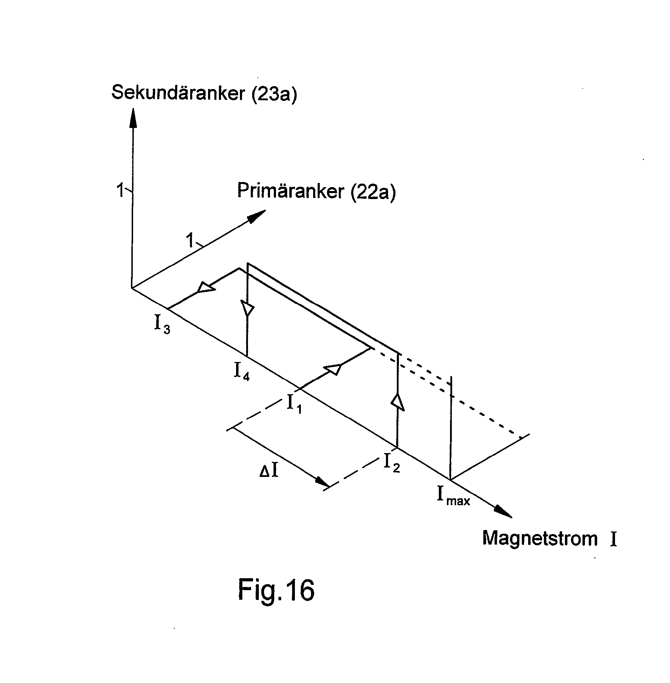

Fig. 16     das Schalten des Belüftungs- und Entlüftungsventils der Ventil-Modulator-Einrichtung in Abhängigkeit von dem die Magnetspule durchfließenden Magnetstrom.

In allen Schnittdarstellungen dieser Zeichnung sind die nicht magnetisch leitfähigen (nicht ferromagnetischen) Teile mit einer Kreuzschraffierung dargestellt, damit sie von den einfach schraffierten magnetischen Teilen leicht zu unterscheiden sind.

Zur Kennzeichnung gleichwirkender Einrichtungen sind, soweit dies sachlich zutreffend ist, in den Zeichnungen

verschiedene Bezugzeichen (1, 2, 4, 5, 6, 17, 18, 21, 22 und 23) aus der D4 übernommen.

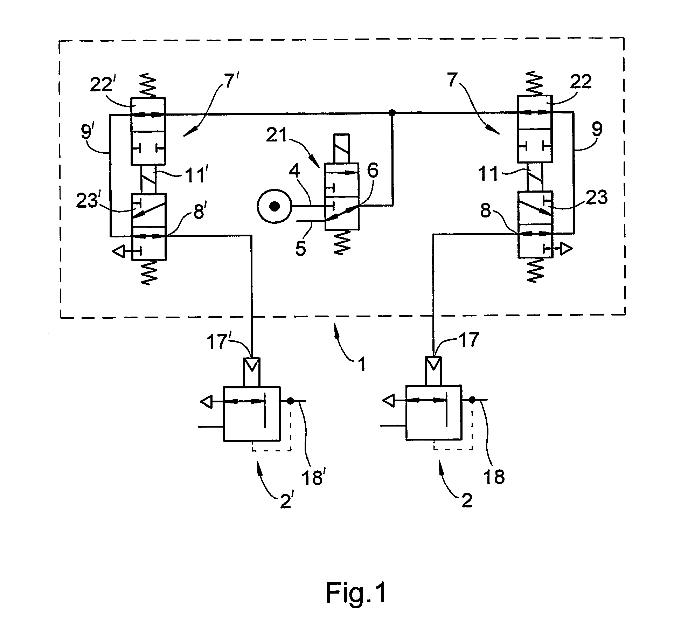

Fig. 1 zeigt die erfindungsgemäße pneumatische Ventilsteuereinrichtung, die insbesondere als Vorsteuereinheit (1) für eine elektronisch-pneumatische Bremsdruckanlage eingesetzt wird; sie ist in der Lage, einen Vorsteuerdruck für zwei unterschiedliche Bremsdruckregelkreise, einen ersten und einen zweiten Bremsdruckregelkreis zur Verfügung zu stellen.

Bei dieser Vorsteuereinheit dient ein 3/2-Magnetventil (21) mit zwei Eingängen (4, 5) und einem Ausgang (6) als Redundanzventil und eine erste Ventil-Modulator-Einrichtung (7) für den ersten Bremsdruckregelkreis und eine zweite Ventil-Modulator-Einrichtung (7') für den zweiten Bremsdruckregelkreis. Bei dem als Redundanzventil ausgebildeten 3/2-Magnetventil (21) ist am ersten Eingang (4) ein Versorgungsdruck und am zweiten Eingang (5) ein Redundanzdruck angelegt. Dieser Redundanzdruck wird, wie in EBS-Anlagen üblich, mit ausschließlich mechanischpneumatischen Mitteln erzeugt; wird die Vorsteuereinheit in einem Motorwagen eingesetzt, so wird der Redundanzdruck vom fahrerbetätigten Motorwagen-Bremsventil geliefert, wird die Vorsteuereinheit in einem Anhängefahrzeug eingesetzt, so wird der im Motorwagen erzeugte Redundanzdruck an den Anhänger über die gelbe Bremsdruckleitung (Bremsschlauch) übertragen.

Zumindest bei der Anwendung für den EBS-Betrieb ist ein pneumatischer Ausgang (8) der ersten Ventil-Modulator-Einrichtung (7) mit einem Eingang (17) eines luftmengenverstärkenden Relaisventils (2) für den ersten Bremsdruckregelkreis verbunden; in gleicher Weise ist ein pneumatischer Ausgang (8') der zweiten Ventil-Modulator-Einrichtung (7') mit einem luftmengenverstärkenden Relaisventil (2') für den zweiten Bremsdruckregelkreis verbunden. Die Ausgänge (18, 18') der Relaisventile (2, 2') stellen die ausgesteuerten Bremsdrücke für den ersten bzw. den zweiten Bremsdruckregelkreis dar.

Wegen der unten erläuterten kostengünstigen Konstruktion der Ventil-Modulator-Einrichtungen (7, 7') lässt sich vorteilhafterweise die Vorsteuereinheit (1) auch für andere Anwendungen als eine EBS-Regelung verwenden; zum Beispiel ist sie in ihrem Grundaufbau auch als Belüftungs-/Entlüftungs-Einrichtung für die linken und rechten Luftfederbälge einer elektronisch geregelten Luftfederungsanlage (ECAS) zu verwenden. Im weiteren sind also die vorteilhaften Eigenschaften der Vorsteuereinheit (1) auch für ihre allgemeine Anwendbarkeit beschrieben.

Entsprechend Fig. 1 ist der Ausgang (6) des 3/2-Magnetventils (21) pneumatisch sowohl mit der ersten Ventil-Modulatoreinrichtung (7) für den ersten Druckregelkreis als auch mit der zweiten Ventil-Modulator-Einrichtung (7') für den zweiten Druckregelkreis verbunden. Die zweite Ventil-Modulator-Einrichtung (7') ist identisch zur ersten Ventil-Modulator-Einrichtung (7) aufgebaut, weshalb es ausreicht, dass ihre Konstruktion unten in den Erläuterungen zu den Zeichnungen Fig. 9 - 14 anhand der ersten Ventil-Modulator-Einrichtung (7) erläutert wird.

Eine jeweilige Ventil-Modulator-Einrichtung (7, 7') ist aus einem ersten, stromlos offenen 2/2-Magnetventil (22, 22') als Belüftungsventil und einem zweiten, stromlos geschlossenen 2/2-Magnetventil (23, 23') als Entlüftungsventil aufgebaut, welche über eine interne Verbindung (9, 9') miteinander verbunden sind.

Wie in Fig. 10 gezeigt, sind für das erste 2/2-Magnetventil (22) und das zweite 2/2-Magnetventil (23) in einer gemeinsamen Ankerführungsanordnung (10) für die Ventil-Modulator-Einrichtung (7) angeordnete, mit einer Feder (22f, 23f) belastete Magnetanker, ein erster Primäranker (22a) und ein zweiter Sekundäranker (23a), vorgesehen, welche jeweils durch eine, für beide Magnetventile vorgesehene, gemeinsame Magnetspule (11) betätigt werden, und bei denen mindestens der Sekundäranker (23a) mit einem Elastomereinsatz (23e) versehen ist; in der Ausführungsform nach Fig. 10 verfügt auch der Primäranker (22a) über einen Elastomereinsatz (22e). Der Primäranker (22a) ist als Schaltelement für das Belüftungsventil (22) und der Sekundäranker (23a) ist als Schaltelement für das Entlüftungsventil (23) vorgesehen.

Bei stromloser Magnetspule (11) befinden sich sowohl der Primäranker (22a) des Belüftungsventils (22) als auch der Sekundäranker (23a) des Entlüftungsventils (23) in ihrer durch die Federbelastung (22f bzw. 23f) festgelegten Grundstellung.

Wird durch Anlegen einer Spannungs- oder Stromquelle ein Magnetstrom I in die Magnetspule (11) eingespeist, so wirkt entsprechend des aufgrund der Durchflutung

$$\Theta = w \cdot I$$

(w = Windungszahl) beide Anker durchfließenden magnetischen Flusses $\Phi$ auf beide Anker je eine Magnetkraft ein. Erreicht der die Magnetspule (11) durchfließende Magnetstrom einen ersten Magnetstrom der festgelegten Größe $I_1$, so wird der Primäranker (22a) des Belüftungsventils (22) in seine durch die Magnetkraft bestimmte Schaltstellung versetzt, während der Sekundäranker (23a) des Entlüftungsventils (23) noch im federbelasteten Grundzustand verbleibt.

Erreicht der die Magnetspule (11) durchfließende Magnetstrom I einen zweiten Magnetstrom von der festgelegten Größe $I_2$, welcher um einen festgelegten Betrag $\Delta I$ größer ist als der erste Magnetstrom $I_1$, so sind sowohl der Primäranker (22a) des Belüftungsventils (22) als auch der Sekundäranker (23a) des Entlüftungsventils (23) in ihre durch die Magnetkraft bestimmten Schaltstellungen versetzt.

In den Darstellungen Fig. 2 bis Fig. 8 sind, in stark schematisierter Art, in Anlehnung an die Darstellungsweise von Fig. 4 in der D1, die Schaltzustände der beteiligten Ventile für die vorzugsweise Anwendung der Ventilsteuereinheit als EBS-Vorsteuereinheit dargestellt; der Übersichtlichkeit halber sind nur die Funktionselemente für den ersten Bremsdruckregelkreis dargestellt, und die Magnetspulen sind weggelassen.

Im Redundanzbetrieb nach Fig. 2 sind das 3/2-Magnetventil (21), das erste stromlos offene 2/2-Magnetventil (22) und das zweite stromlos geschlossene 2/2-Magnetventil (23) in ihrer federbelasteten Grundstellung, so dass der am ersten pneumatischen Eingang (5) des 3/2-Magnetventils (21) anliegende Redundanzdruck zum Ausgang (8) der Ventil-Modulator-Einrichtung (7) übertragen wird.

Fig. 3 zeigt das Belüften im EBS-Betrieb; beim EBS-Betrieb ist das 3/2-Magnetventil (21) im geschalteten Zustand, so dass der am zweiten pneumatischen Eingang (4) anliegende Versorgungsdruck wirksam ist. Das zweite 2/2-Magnetventil (23) bleibt in seinem geschlossenen Grundzustand, und das erste 2/2-Magnetventil (22) ist geöffnet; der Magnetanker (22a) in seiner gezeigten Zwischenstellung deutet das übliche "Takten" beim Belüftungsvorgang an.

Soll im EBS-Betrieb ein ausgesteuerter Druck gehalten werden, so wird, ausgehend von der Schaltstellung nach Fig. 3, wie in Fig. 4 dargestellt, das erste 2/2-Magnetventil (22) geschlossen (Metall-Metall-Dichtsitz), so dass über die Vorsteuereinheit (1) keine Beeinflussung des am Ausgang (8) anliegenden Drucks mehr stattfindet.

Zum Entlüften im EBS-Betrieb wird, ausgehend von der Schaltstellung nach Fig. 4, wie in Fig. 5 dargestellt, das 2/2-Magnetventil (23), üblicherweise ebenfalls in getakteter Weise, geöffnet.

Der Vollständigkeit halber sind in Fig. 6 bis Fig. 8 die Ventilstellungen für den reinen ABS-Betrieb dargestellt; im ABS-Betrieb ist der Fahrerwille wirksam, der durch den Redundanzdruck repräsentiert wird, so dass das 3/2-Magnetventil (21) in seinem federbelasteten Grundzustand verbleibt: Das ABS-Entlüften nach Fig. 6 entspricht also dem EBS-Entlüften nach Fig. 5 mit geschaltetem 3/2-Magnetventil (21), das ABS-Druckhalten nach Fig. 7 entspricht dem EBS-Druckhalten nach Fig. 4 mit geschaltetem 3/2-Magnetventil (21), und das ABS-Belüften nach Fig. 8 entspricht dem EBS-Druckhalten nach Fig. 3 mit geschaltetem 3/2-Magnetventil (21).

In der folgenden weiteren Erläuterung der Konstruktion der Ventil-Modulator-Einrichtung (7) wird auf Fig. 10 Bezug genommen, die einen Schnitt B-B zeigt, dessen Schnittverlauf in Fig. 9 dargestellt ist.

An der gemeinsamen Ankerführungsanordnung (10) ist eine Magnetspulen-Halterung (13) für die gemeinsame Magnetspule (11) angeordnet und zur Erzeugung eines starken Magnetfeldes ist ein U-förmiges Magnetjoch (14) vorgesehen.

An der gemeinsamen Ankerführungsanordnung (10) ist im Bereich des Primärankers (22a) eine Magnetfeldbündelnde Jochbuchse (15) aus ferromagnetischem Material vorgesehen, welche sich an einem für den Primäranker (22a) vorgesehenen Ankerführungsrohr (22r) über einen bestimmten Längenbereich erstreckt.

Für den Sekundäranker (23a) ist ebenfalls eine Magnetfeld-bündelnde Jochbuchse (16) vorgesehen, jedoch erstreckt sich, wie aus Fig. 10 ersichtlich, diese Jochbuchse (16) an dem für den Sekundäranker (23a) vorgesehenen Ankerführungsrohr (23r) über einen größeren Längenbereich als den Längenbereich der Jochbuchse (15) des Primärankers (22a).

Erfindungsgemäß wird mit der im Vergleich zur Jochbuchse (15) des Primärankers (22a) verlängerten Jochbuchse (16) des Sekundärankers (23a), wie unten erläutert, ein parallel zum Sekundäranker (23a) geschalteter magnetischer Nebenschluss realisiert.

Zur Vervollständigung des magnetischen Kreises ist, fest zwischen dem belüftenden 2/2-Magnetventil (22) und dem entlüftenden 2/2-Magnetventil (23) angeordnet, ein Magnetkern (12) vorgesehen, in welchem die interne Verbindung (9) als Bohrung eingebracht ist. An seiner zum 2/2-Magnetventil (23) weisenden Begrenzung ist im Magnetkern (12) eine nicht-magnetische Scheibe (25) aus nicht magnetischem Material vorgesehen.

In Fig. 10 sind weiter eine Reihe nicht näher bezeichneter O-Ringe eingezeichnet, die zur gegenseitigen Abdichtung von Druckräumen in der Ventil-Modulator-Einrichtung (7) dienen.

Die Konstruktion der Vorsteuereinheit (1) mit dem 3/2-Magnetventil (21) und der Ventil-Modulator-Einrichtung (7) ist in Fig. 9 als Schnitt A-A dargestellt, dessen Schnittverlauf in Fig. 10 gezeigt ist. Wie in Fig. 9 dargestellt, sind die Magnetanker (21a, 22a, 23a) gleichartig ausgebildet, was eine bevorzugte Ausführungsform darstellt.

Diese gleichartigen Magnetanker (21a, 22a, 23a) sind entsprechend der DE 101 13 316 A1 (Schrift D6) vorteilhafterweise als kleiner Anker mit einem Gewicht von ca. nur 6 g ausgebildet, bei denen der Anker-Metallkörper vollständig mit PTFE-Kunststoff beschichtet ist und das Elastomer-Dichtelement zwar in vereinfachter Vulkanisierung ohne Haftvermittler eingebracht ist, dieses Dichtelement mit dem Anker-Metallkörper aber durch eine Hinterschneidung formschlüssig verbunden ist.

In gleicher Weise ist es auch vorteilhaft, die gemeinsame Magnetspule (11) der Ventil-Modulator-Einrichtung (7) gleichartig zur Magnetspule (27) des 3/2-Magnetventils (21) auszubilden.

Der Vergleich beider Ventileinheiten (21, 7) zeigt die unterschiedliche Ausgestaltung der Jochbuchsen:

Die am Ankerführungsrohr (21r) des 3/2-Magnetventils (21) angeordnete Jochbuchse (28-1) ist in ihrer Länge gleich zur Jochbuchse (15) am Ankerführungsrohr (22a) ausgebildet. Die Jochbuchse (28-2) als Gegenstück am unteren Ende des U-förmigen Magnetjochs (29) des 3/2-Magnetventils (21) ist in ihrer Länge identisch zum Jochbuchse (28-1). Im Vergleich zum Magnetjoch (28-2) ist jedoch, wie oben erläutert, die Jochbuchse (16) am unteren Ende des U-förmigen Magnetjochs (14) der Ventil-Modulator-Einrichtung (7) als Gegenstück zu der am Ankerführungsrohr (22r) angeordneten Jochbuchse (15) deutlich länger ausgebildet.

Bei der Realisierung des magnetischen Nebenbeschlusses für den Sekundäranker (23a) nach Fig. 10 ist das für diesen Anker vorgesehene Ankerführungsrohr (23r) - wie überhaupt die anderen Ankerführungsrohre (22r und 21r) - aus nichtmagnetischem Material, z. B. aus Niro-Stahl gefertigt.

Wie in Fig. 11 dargestellt, wird durch die oben erläuterte Durchflutung $\theta$, welche aufgrund des die Magnetspule (11) durchfließenden Stroms I generiert wird, im Primäranker (22a) der Ventil-Modulator-Einrichtung (7) ein magnetischer Fluss $\Phi_1$ erzeugt; ein Anteil $\Phi_N$ dieses Flusses wird durch einen magnetischen Nebenschluss vom Sekundäranker (23a) abgeleitet, so dass in diesem Anker ein Fluss $\Phi_2$ wirksam ist, der gegenüber $\Phi_1$ um den Nebenschluss-Anteil $\Phi_N$ reduziert ist:

$$\Phi_2 = \Phi_1 - \Phi_N \qquad\qquad [1]$$

Für das Schalten ist für den Primäranker (22a) der magnetkraftbestimmende Fluss $\Phi_1$ und für den Sekundäranker (23a) der Fluss $\Phi_2$ maßgebend; ein Anker (22a, 23a) geht aus seinem jeweiligen Grundzustand dann in seinen Schaltzustand über, wenn die auf ihn wirkende Magnetkraft die Kraft seiner Rückstellfeder (22f, 23f) überschreitet.

Zur Erläuterung des magnetischen Nebenschlusses ist das dreidimensionale magnetische Feld in Fig. 11 in vereinfachter und schematisierter Form als Magnetfluss-Kreis (3) dargestellt, mit erstens einem Hauptpfad (19), nämlich dem Pfad mit dem im Sekundäranker (23a) wirksamen Fluss $\Phi_2$, und zweitens einem den magnetischen Nebenschluss bildenden Nebenpfad (20), der vom Fluss $\Phi_N$ durchströmt wird.

Im Magnetkern (12) findet die Aufteilung des vom Primäranker (22a) eingeleiteten Flusses $\Phi_1$ in die Flüsse $\Phi_2$ und $\Phi_N$ statt: An einen ersten gemeinsamen Magnetpfad mit ungeschwächtem Fluss $\Phi_1$ schließt sich im Magnetkern (12) an der Verzweigung (26) ein zweiter Magnetpfad, als Teil des magnetischen Hauptpfades (19) mit dem geschwächten Fluss $\Phi_2$, an, und parallel zum zweiten Magnetpfad liegt im Magnetkern (12) ein dritter Magnetpfad, als Teil des magnetischen Nebenpfades (20), mit dem Fluss $\Phi_N$ des Nebenschlusses.

Der im Nebenpfad (20) wirksame Fluss $\Phi_N$ stellt erfindungsgemäß die erwünschte Ursache für die oben erwähnte, zum Schalten des Sekundärankers (23a) erforderliche Schaltschwellen-Erhöhung $\Delta I$ dar. Zum Erhalt einer bei der Ventilauslegung der Ventil-Modulator-Einrichtung (7) üblicherweise vorgegebenen Schaltschwellen-Erhöhung $\Delta I$ ist also der Nebenschluss-Fluss $\Phi_N$ zusammen mit dem Fluss $\Phi_1$ durch den Primäranker (22a) durch Festlegung der beteiligten magnetischen Widerstände bestimmbar.

Fig. 15a zeigt das Ersatzschaltbild des Magnetfluss-Kreises (3) mit dem Haupt- und Nebenpfad (19, 20) nach Fig. 11, mit der Magnetfluss-erzeugenden Durchflutung $\theta$, den magnetischen Flüssen $\Phi_1$, $\Phi_2$ und $\Phi_N$ und den zunächst allgemein angenommenen magnetischen Widerständen $R_A$, $R_B$ und $R_C$.

Durch Anwendung der Kirchhoff'schen Regeln auf das Ersatzschaltbild nach Fig. 15a sind die erläuterten Flüsse bestimmbar; für den ungeschwächten Fluss $\Phi_1$ durch den Primäranker (22a) ergibt sich:

$$\Phi_1 = \frac{\Theta}{R_A + \dfrac{R_B \cdot R_C}{R_B + R_C}} \qquad\qquad [2]$$

Für den geschwächten Fluss $\Phi_2$ durch den Sekundäranker (23a) ergibt sich:

$$\Phi_2 = \frac{\Theta}{\dfrac{R_A}{R_C} \cdot (R_B + R_C) + R_B} \qquad [3]$$

Für den für den Nebenschluss-Fluss $\Phi_N$ ergibt sich:

$$\Phi_N = \frac{\Theta}{\dfrac{R_A}{R_B} \cdot (R_B + R_C) + R_C} \qquad [4]$$

Die magnetischen Widerständen $R_A$, $R_B$, $R_C$, stellen, wie in Fig. 15b gezeigt, jeweils Reihenschaltungen von magnetischen Widerständen von einzelnen mechanischen Einrichtungen nach Fig. 11 dar, und durch geeignete Dimensionierung dieser Einrichtungen lassen sich dann die für den gewünschten Strom $I_1$ zum Schalten des Primärankers (22a) und für die Schaltschwellen-Erhöhung $\Delta I$ zum Schalten des Sekundärankers (23a) erforderlichen magnetischen Flüsse $\Phi_1$ und $\Phi_N$, nach Gleichung [2] und [3] bestimmen.

Dabei stellt entsprechend Fig. 15b der magnetische Widerstand $R_A$ die Reihenschaltung der magnetischen Widerständen von folgenden mechanischen Einrichtungen nach Fig. 11 im gemeinsamen magnetischen Pfad, der vom Fluss $\Phi_1$ durchströmt wird, dar:

$R_1$ (R1)   magnetischer Widerstand des U-förmigen Magnetjochs (14) ;

$R_2$ (R2)   magnetischer Widerstand der für den Primäranker (22a) vorgesehenen Jochbuchse (15);

$R_3$ (R3)   magnetischer Widerstand des nicht magnetischen Ankerführungsrohrs (22r) für den Primäranker (22a) und des Luftspiels zum Primäranker (22a)

$R_4$ (R4)   magnetischer Widerstand des Primärankers (22a) ;

$R_5$ (R5)   magnetischer Widerstand des Luftspaltes zwischen dem Primäranker (22a) und seinem Metall-Metall-Dichtsitz am Magnetkern (12);

$R_6$ (R6)   magnetischer Widerstand des ersten gemeinsamen Magnetpfades im Magnetkern (12) ohne Feldschwächung durch den magnetischen Nebenpfad (20).

Weiter stellt der magnetische Widerstand $R_B$ die Reihenschaltung der magnetischen Widerstände von folgenden mechanischen Einrichtungen im magnetischen Hauptpfad (19) nach Fig. 11 dar:

$R_7$ (R7)   magnetischer Widerstand des zweiten Magnetpfades im Magnetkern (12), der durch den magnetischen Nebenpfad (20) geschwächt ist;

$R_8$ (R8)   magnetischer Widerstand des Luftspaltes zwischen dem Sekundäranker (23a) und seinem Metall-Metall-Dichtsitz am Magnetkern (12);

$R_9$ (R9)   magnetischer Widerstand des Sekundärankers (23a);

$R_{10}$ (R10)   magnetischer Widerstand des Luftspiels zum Sekundäranker (23a) und des nicht magnetischen Ankerführungsrohrs (23r) für den Sekundäranker (23a);

$R_{11}$(R11)   magnetischer Widerstand der für den Sekundäranker (23a) vorgesehenen Jochbuchse (16) längs ihrem Magnetpfad in radialer Richtung.

Schließlich stellt der magnetische Widerstand $R_C$ die Reihenschaltung der magnetischen Widerstände von folgenden mechanischen Einrichtungen im magnetischen Nebenpfad (20) nach Fig. 11 dar:

$R_{12}$ (R12)    magnetischer Widerstand des dritten Magnetpfades im Magnetkern (12) zur Feldschwächung durch den magnetischen Nebenpfad (20);

$R_{13}$ (R13)    magnetischer Widerstand der für den Sekundäranker (23a) vorgesehenen Jochbuchse (16) längs ihrem Magnetpfad in axialer Richtung als Teil des magnetischen Nebenpfades (20).

Die anhand von Fig. 15 erläuterten Widerstände $R_1$ bis $R_{13}$ gelten für den in Fig. 11 dargestellten Zustand, bei dem sich der Primäranker (22a) und der Sekundäranker (23a) jeweils in ihrem durch die Federbelastung bestimmten Grundzustand befinden. Bei einem von Null ausgehenden Anstieg des Magnetstroms I erhöht sich nach diesen Widerständen der Fluss $\Phi_1$ im Primäranker (22a), bis mit dem Erreichen des Stromes $I_1$ der Primäranker (22a) schaltet und mit seiner dem Magnetkern (12) zugewandten Begrenzungsfläche an diesem metallisch dichtend zur Anlage kommt.

Zu diesem Zeitpunkt (vergl. Fig. 15c) wird der magnetische Luftspalt-Widerstand (R5) praktisch zu Null, was mit einem erheblichen Anstieg des Flusses $\Phi_1$ verbunden ist. Um zu verhindern, dass der Sekundäranker (23a) bereits mit dem Erreichen des Magnetstroms $I_1$ ebenfalls schaltet, wird ein Teil $\Phi_N$ dieses erhöhten Flusses $\Phi_1$ über den magnetischen Nebenpfad (20) abgeleitet, so dass der im Hauptpfad (19) verbleibende Fluss $\Phi_2$ noch nicht ausreicht, um auch den Sekundäranker (23a) zu schalten. Durch den magnetischen Nebenpfad (20) werden also die Magneteigenschaften des Sekundärankers (23a) im Vergleich zum Primäranker (22a) in einer ganz bestimmten, durch die Magnetflussteilung an den Widerständen $R_B$ und $R_C$ festgelegten, Art und Weise verschlechtert.

Erst wenn der Magnetstrom I über den ersten Magnetstrom $I_1$ hinausgehend um den Wert $\Delta I$ vergrößert ist, so dass er den zweiten Magnetstrom der festgelegten Größe $I_2$ erreicht, ist der Fluss $\Phi_2$ durch den Sekundäranker (23a) derart erhöht, dass auch der Sekundäranker (23) in seinen Schaltzustand übergeht (vergl. Fig. 15d).

Beim Schalten des Sekundärankers (23a) wird der magnetische Luftspalt-Widerstand (R8) praktisch zu Null und ohne weitere Maßnahmen würde der Fluss $\Phi_2$ im Sekundäranker (23a) sprungartig ansteigen, mit der Folge, dass zum Rückschalten des Sekundärankers (23a) in seinen Grundzustand eine derart starke Rücknahme des Magnetstroms erforderlich wäre, die dann auch zum Rückschalten des Primärankers (22a) führen würde, und damit wäre eine unabhängige Betätigung von Primär- und Sekundäranker (22a, 23a) nicht mehr gewährleistet.

Zur Vermeidung eines solchen Flussanstieges beim Schalten des Sekundärankers (23a) dient die nicht-magnetische Scheibe (25) mit ihrem magnetischen Widerstand $R_{14}$, der in Reihe zum Widerstand $R_6$ angeordnet ist (vergl. Fig. 15d).

Dieser Widerstand ist jedoch nur bei geschaltetem Sekundäranker (23a) wirksam, da sich bei nicht geschaltetem Sekundäranker (23a) die Feldlinien im Luftspalt zwischen Sekundäranker (23a) und dem Magnetkern (12) an den ferromagnetischen Oberflächen dieser Einheiten bündeln, so dass die nicht-magnetische Scheibe (25) nur von einem vernachlässigbaren Streufluss erfasst wird. Der magnetische Widerstand $R_{14}$ (R14) der nicht-magnetischen Scheibe (25) ist also bei nicht geschaltetem Sekundäranker (23a) vernachlässigbar klein; er wird für diesen Fall zu Null gesetzt und nicht weiter berücksichtigt.

Wenn jedoch beim Schalten des Sekundärankers (23a) der magnetische Widerstand $R_8$ des Luftspaltes zwi- schen dem Sekundäranker (23a) und dem Magnetkern (12) selbst zu Null wird, ändern sich die Verhältnisse: Bei der Anlage des Sekundärankers (23a) an den Magnetkern (12) berührt der Sekundäranker (23a) den Magnetkern (12) nur zum Teil über eine direkte Eisen-Eisen-Berührung mit guter Feldübertragung, zum anderen Teil berührt der Sekundäranker (23a) den Magnetkern (12) nämlich über die Stirnfläche der nicht-magnetischen Scheibe (25). Nun ist im Ersatzschaltbild nach Fig. 15d der magnetische Widerstand $R_{14}$ der nicht-magnetischen Scheibe (25) als Reihenwiderstand zwischen den Widerständen R6 und R7 wirksam, womit der Gesamtwiderstand des Magnetfluss-Kreis (3) künstlich vergrößert wird und so ein plötzlicher Anstieg des Flusses $\Phi_2$ durch den Sekundäranker (23a) vermieden wird.

Das Schalten des Primärankers (22a) und des Sekundärankers (23a) in Abhängigkeit vom Magnetstrom I ist in Fig. 16 dargestellt. Wie erläutert, schaltet der Primäranker (22a), wenn der Magnetstrom I mindestens den ersten Magnetstrom $I_1$ erreicht und geht in seinen Grundzustand zurück, wenn der Magnetstrom auf mindenstens einen dritten Magnetstrom $I_3$ abgefallen ist. Der Sekundäranker (23a) schaltet dagegen bei einem Magnetstrom von mindestens dem zweiten Magnetstrom $I_2$ und geht in den Grundzustand bei Abfall des Magnetstroms auf mindestens einen vierten Magnetstrom $I_4$ zurück. Wie gezeigt, ist der vierte Magnetstrom $I_4$ deutlich größer als der dritte Magnetstrom $I_3$, so dass die Schaltbereiche für den Primärund den Sekundäranker (22a, 23a) deutlich voneinander abgegrenzt sind. Die Trennschärfe für die Betätigung beider Anker wird erfindungsgemäß durch die erläuteten zwei Maßnahmen realisiert: Für das "verspätete" Hochschalten des Sekundärankers ($I_2>I_1$) ist der magnetische Nebenpfad und für das "verfrühte" Rück- schalten des Sekundärankers ($I_4>I_3$) ist die nicht-magnetische Scheibe (25) maßgebend. Es sei ergänzt, dass es u. U. möglich ist, den magnetischen Nebenfluss derart stark auszubilden, dass damit das verfrühte Rückschalten des Sekundärankers (23a) ebenfalls verwirklicht ist, womit auf den Einbau der nicht-magnetischen Scheibe (25) verzichtet werden kann.

Bei den weiteren Ausführungsformen eines magnetischen Nebenschlusses für den Sekundäranker (22a) nach Fig. 12-14 wird der Nebenschluss nicht durch Veränderung der Jochbuchse (16) für den Sekundäranker (23a) sondern durch eine Veränderung des Ankerführungsrohrs (23r) selbst erzeugt; bei diesen Ausgestaltungen ist also die Jochbuchse (16) für den Sekundäranker (23a) gleichartig zu der "Normal"-Ausbildung (15 bzw. 28-2) ausgebildet.

In der Ausführungsform nach Fig. 12 ist zur Realisierung des magnetischen Nebenschlusses für den Sekundäranker (23a) das Ankerführungsrohr teilweise aus ferromagnetischem Material ausgebildet; es besteht aus einem ersten ferromagnetischen Teil (30) und einem zweiten nichtmagnetischen Teil (31), und aus dem ersten und zweiten Teil ist das einstückige Ankerführungsrohr (23r) gebildet.

In der Ausführungsform nach Fig. 13 ist das Ankerführungsrohr (23r) für den Sekundäranker (23a) vollständig aus ferromagnetischem Material hergestellt.

Schließlich ist in der Ausführungsform nach Fig. 14 das eigentliche Ankerführungsrohr (23r) für den Sekundäranker (23a) als hohlzylindrische Anformung an den zwischen Primäranker (23) und Sekundäranker (23a) fest angeordneten Magnetanker (12) ausgebildet; der mit dem Ankerführungsrohr (23r) verbundene Federhalterungs-Ansatz (32) aus nichtmagnetischem Material kann alternativ ebenfalls aus magnetischem Material ausgeführt sein.

**Patentansprüche**

1. Pneumatische Ventilsteuereinrichtung mit folgenden Merkmalen:

   a) Es ist ein 3/2-Magnetventil (21) mit zwei Eingängen (4, 5) und einem Ausgang (6) vorgesehen;
   b) der Ausgang (6) des 3/2-Magnetventils (21) ist pneumatisch mit einer ersten Ventil-Modulator-Einrichtung (7) für einen ersten Druckregelkreis und mit einer zur ersten Ventil-Modulator-Einrichtung (7) identisch aufgebauten zweiten Ventil-Modulator-Einrichtung (7') für einen zweiten Druckregelkreis verbunden;
   c) eine jeweilige Ventil-Modulator-Einrichtung (7, 7') ist aus einem ersten, stromlos offenen 2/2-Magnetventil (22, 22') als Belüftungsventil und einem zweiten, stromlos geschlossenen 2/2-Magnetventil (23, 23') als Entlüftungsventil aufgebaut;
   d) für das erste 2/2-Magnetventil (22) und das zweite 2/2-Magnetventil (23) sind in einer gemeinsamen Ankerführungsanordnung (10) der Ventil-Modulator-Einrichtung (7) angeordnete, mit einer Feder (22f, 23f) belastete Magnetanker, ein erster Primäranker (22a) und ein zweiter Sekundäranker (23a), vorgesehen, welche jeweils durch eine für beide Magnetventile vorgesehene gemeinsame Magnetspule (11) betätigt sind, und bei denen mindestens der Sekundäranker (23a) mit einem Elastomer-Einsatz (23e) versehen ist;
   e) der Primäranker (22a) ist als Schaltelement für das Belüftungsventil (22) und der Sekundäranker (23a) ist als Schaltelement für das Entlüftungsventil (23) vorgesehen;
   f) bei stromloser Magnetspule (11) befinden sich sowohl der Primäranker (22a) des Belüftungsventils (22) als auch der Sekundäranker (23a) des Entlüftungsventils (23) in ihrer durch die Federbelastung festgelegten Grundstellung;
   g) durch Einspeisung eines die Magnetspule (11) durchfließenden ersten Magnetstromes von festgelegter Größe ($I_1$) ist der Primäranker (22a) des Belüftungsventils (22) in seine durch die Magnetkraft bestimmte Schaltstellung versetzt, während der Sekundäranker (23a) des Entlüftungsventils (23) im federbelasteten Grundzustand verbleibt;
   h) durch Einspeisung eines die Magnetspule (11) durchfließenden zweiten Magnetstromes von festgelegter Größe ($I_2$), welcher um einen festgelegten Betrag ($\Delta I$) größer ist als der erste Magnetstrom ($I_1$), sind sowohl der Primäranker (22a) des Belüftungsventils (22), als auch der Sekundäranker (23a) des Entlüftungsventils (23) in ihre durch die Magnetkraft bestimmten Schaltstellungen versetzt;
   i) der Primäranker (22a) und der Sekundäranker (23a) sind in einem gemeinsamen Magnetfluss-Kreis (3) angeordnet, in dem der magnetische Fluss durch den die Magnetspule (11) durchfließenden Magnetstrom (I) erzeugt ist und bei dem der magnetische Fluss ($\Phi_2$) im Sekundäranker (23a) gegenüber dem magnetischen Fluss ($\Phi_1$) im Primäranker (22a) reduziert ist.

2. Ventilsteuereinrichtung nach Anspruch 1, **dadurch gekennzeichnet, dass** durch Absenkung eines die Magnetspule (11) durchfließenden Magnetstromes von der Größe des zweiten Magnetstromes der festgelegten Größe ($I_2$) auf einen dritten Magnetstrom mit der festgelegten Größe ($I_3$) der Sekundäranker (23a) des Entlüftungsventils (23) in seine federbelastete Grundstellung versetzt ist, während der Primäranker (22a) des Belüftungsventils (22) in seiner durch die Magnetkraft bestimmten Schaltstellung verbleibt.

3. Ventilsteuereinrichtung nach Anspruch 1 oder 2, **dadurch gekennzeichnet, dass** sowohl der Primäranker (22a) als auch der Sekundäranker (23a) mit einem Elastomer-Einsatz (22e, 23e) versehen sind und beide Anker identisch zueinander ausgebildet sind.

**4.** Ventilsteuereinrichtung nach mindestens einem der Ansprüche 1 bis 3, **dadurch gekennzeichnet, dass** sie als Vorsteuereinheit (1) für zwei Bremsdruckregelkreise, einen ersten und einen zweiten Bremsdruckregelkreis einer elektronisch-pneumatischen Bremsdruckanlage, vorgesehen ist, bei der das 3/2-Magnetventil (21) als Redundanzventil ausgebildet ist, und am ersten Eingang (4) des 3/2-Magnetventils (21) ein Versorgungsdruck und am zweiten Eingang (5) des 3/2-Magnetventils (21) ein Redundanzdruck angelegt ist.

**5.** Ventilsteuereinrichtung nach einem der Ansprüche 1 bis 4, **dadurch gekennzeichnet, dass** die Reduzierung des magnetischen Flusses ($\Phi_2$) im Sekundäranker durch einen parallel zum Sekundäranker (23a) geschalteten magnetischen Nebenschluss (20) realisiert ist.

**6.** Ventilsteuereinrichtung nach einem der Ansprüche 1 bis 4, **gekennzeichnet durch** die folgenden Merkmale:

a) an der gemeinsamen Ankerführungsanordnung (10) der Ventil-Modulator-Einrichtung (7) sind im Bereich des Primärankers (22a) und im Bereich des Sekundärankers (23a) magnetfeldbündelde Jochbuchsen (15, 16) aus ferromagnetischem Material vorgesehen;
b) zur Realisierung des magnetischen Nebenschlusses erstreckt sich die für den Sekundäranker (23a) vorgesehene Jochbuchse (16) an einem Ankerführungsrohr (23r) für den Sekundäranker (23a) über einen größeren Längenbereich als den Längenbereich der Jochbuchse (15) für den Primäranker (22a) an einem Ankerführungsrohr (22r) für den Primäranker (22a).

**7.** Ventilsteuereinrichtung nach einem der Ansprüche 1 bis 5, **dadurch gekennzeichnet, dass** zur Realisierung des magnetischen Nebenschlusses das für den Sekundäranker (23a) vorgesehene Ankerführungsrohr (23r) zumindest teilweise aus ferromagnetischem Material ausgebildet ist.

**8.** Ventilsteuerung nach einem der Ansprüche 1 bis 5, **dadurch gekennzeichnet, dass** zur Realisierung des magnetischen Nebenschlusses das für den Sekundäranker (23a) vorgesehene Ankerführungsrohr (23r) als hohlzylindrische Anformung an einem in der gemeinsamen Ankerführungsanordnung (10) zwischen dem Primär- und dem Sekundäranker (22a, 23a) fest angeordneten Magnetanker (12) ausgebildet ist.

**9.** Ventilsteuereinrichtung nach mindestens einem der vorstehenden Ansprüche, **gekennzeichnet durch** die folgenden Merkmale:

a) in der gemeinsamen Ankerführungsanordnung (10) der Ventil-Modulator-Einrichtung (7) ist zwischen dem Bereich des Primärankers (22a) und dem Bereich des Sekundärankers (23a) der fest mit der Ankerführungsanordnung (10) verbundene Magnetkern (12) aus ferromagnetischem Material vorgesehen;
b) an der zum Sekundäranker (23a) weisenden Begrenzung des Magnetkerns (12) ist eine nicht-magnetische Scheibe (25) aus nicht-magnetischem Material vorgesehen.

**Claims**

**1.** Pneumatic valve control device having the following characteristics:

a) a 3/2 solenoid valve (21) having two inlets (4, 5) and an outlet (6) is provided;
b) the outlet (6) of the 3/2 solenoid valve (21) is connected pneumatically to a first valve modulator device (7) for a first pressure regulating circuit and to a second valve modulator device (7'), which is identical to the first valve modulator device (7) in terms of construction, for a second pressure regulating circuit;
c) each valve modulator device (7, 7') is composed of a first 2/2 solenoid valve (22, 22'), open when non-energised, as an air supply valve, and a second 2/2 solenoid valve (23, 23'), closed when non-energised, as an air outlet valve;
d) for the first 2/2 solenoid valve (22) and the second 2/2 solenoid valve (23) there are provided armatures, a first primary armature (22a) and a second secondary armature (23a), which are arranged in a common armature guide arrangement (10) of the valve modulator device (7) and are biased by means of a spring (22f, 23f), and which are each actuated by a common electromagnetic coil (11) provided for both solenoid valves, and in which at least the secondary armature (23a) is provided with an elastomeric insert (23e);
e) the primary armature (22a) is provided as the switching element for the air supply valve (22), and the secondary armature (23a) is provided as the switching element for the air outlet valve (23);

f) when the electromagnetic coil (11) is in the non-energised state, both the primary armature (22a) of the air supply valve (22) and the secondary armature (23a) of the air outlet valve (23) are in their normal position given by the spring biasing;

g) by feeding in a first magnetising current having a given value ($I_1$), which flows through the electromagnetic coil (11), the primary armature (22a) of the air supply valve (22) is displaced into its switched position determined by the magnetic force, while the secondary armature (23a) of the air outlet valve (23) remains in the spring-biased normal state;

h) by feeding in a second magnetising current having a given value ($I_2$), which is greater than the first magnetising current ($I_1$) by a fixed amount ($\Delta I$) and which flows through the electromagnetic coil (11), both the primary armature (22a) of the air supply valve (22) and the secondary armature (23a) of the air outlet valve (23) are displaced into their switched positions determined by the magnetic force;

i) the primary armature (22a) and the secondary armature (23a) are arranged in a common magnetic flux circuit (3), in which the magnetic flux is produced by the magnetising current (I) flowing through the electromagnetic coil (11) and in which the magnetic flux ($\Phi_2$) in the secondary armature (23a) is reduced as compared with the magnetic flux ($\Phi_1$) in the primary armature (22a).

2. Valve control device according to claim 1, **characterised in that**, by reducing a magnetising current flowing through the electromagnetic coil (11) from the value of the second magnetising current having the given value ($I_2$) to a third magnetising current having the given value ($I_3$), the secondary armature (23a) of the air outlet valve (23) is displaced into its spring-biased normal position, while the primary armature (22a) of the air supply valve (22) remains in its switched position determined by the magnetic force.

3. Valve control device according to claim 1 or 2, **characterised in that** both the primary armature (22a) and the secondary armature (23a) are provided with an elastomeric insert (22e, 23e), and both armatures are identical with one another in terms of construction.

4. Valve control device according to at least one of claims 1 to 3, **characterised in that** it is provided as a pilot unit (1) for two brake pressure regulating circuits, first and second brake pressure regulating circuits of an electronic-pneumatic brake pressure system, in which the 3/2 solenoid valve (21) is in the form of a redundancy valve, and a supply pressure is applied to the first inlet (4) of the 3/2 solenoid valve (21) and a redundancy pressure is applied to the second inlet (5) of the 3/2 solenoid valve (21).

5. Valve control device according to any one of claims 1 to 4, **characterised in that** the reduction of the magnetic flux ($\Phi_2$) in the secondary armature is achieved by a magnetic shunt (20) connected in parallel with the secondary armature (23a).

6. Valve control device according to any one of claims 1 to 4, **characterised by** the following characteristics:

a) magnetic-field-concentrating yoke bushings (15, 16) of ferromagnetic material are provided on the common armature guide arrangement (10) of the valve modulator device (7), in the region of the primary armature (22a) and in the region of the secondary armature (23a);

b) in order to produce the magnetic shunt, the yoke bushing (16) provided for the secondary armature (23a) extends on an armature guide tube (23r) for the secondary armature (23a) over a greater length region than the length region of the yoke bushing (15) for the primary armature (22a) on an armature guide tube (22r) for the primary armature (22a).

7. Valve control device according to any one of claims 1 to 5, **characterised in that**, in order to produce the magnetic shunt, the armature guide tube (23r) provided for the secondary armature (23a) is made at least partly of ferromagnetic material.

8. Valve control device according to any one of claims 1 to 5, **characterised in that**, in order to produce the magnetic shunt, the armature guide tube (23r) provided for the secondary armature (23a) is in the form of a cylindrical hollow element formed on an armature (12) fixedly arranged in the common armature guide arrangement (10) between the primary and secondary armatures (22a, 23a).

9. Valve control device according to at least one of the preceding claims, **characterised by** the following characteristics:

a) the magnetic core (12) of ferromagnetic material fixedly connected to the armature guide arrangement (10) is provided in the common armature guide arrangement (10) of the valve modulator device (7) between the region of the primary armature (22a) and the region of the secondary armature (23a);

b) a non-magnetic plate (25) of non-magnetic material is provided at the boundary of the magnetic core (12) facing the secondary armature (23a).

**Revendications**

1. Système de commande de vanne pneumatique, comprenant les caractéristiques suivantes :

a) il est prévu une vanne magnétique (21) à 3 voies/2 positions présentant deux entrées (4, 5) et une sortie (6) ;

b) la sortie (6) de la vanne magnétique (21) à 3 voies/2 positions est reliée sur le plan pneumatique à un premier dispositif modulateur à vanne (7) pour un premier circuit de régulation de pression et à un second dispositif modulateur à vanne (7') de réalisation identique au premier dispositif modulateur à vanne (7), pour un second circuit de régulation de pression ;

c) un dispositif modulateur à vanne (7, 7') respectif est constitué d'une première vanne magnétique (22, 22') à 2 voies/2 positions ouverte en l'absence de courant, à titre de vanne de mise à l'air et d'une seconde vanne magnétique (23, 23') à 2 voies/2 positions fermée en l'absence de courant, à titre de vanne de purge d'air ;

d) pour la première vanne magnétique à 2 voies/2 positions (22) et la seconde vanne magnétique à 2 voies/2 positions (23), il est prévu des armatures magnétiques agencées dans un moyen de guidage d'armature commun (10) du dispositif modulateur à vanne (7) et chargées par un premier ressort (22f, 23f), à savoir une première armature primaire (22a) et une seconde armature secondaire (23a), lesquelles sont respectivement actionnées par une bobine magnétique commune (11) prévue pour les deux vannes magnétiques, et dans lesquelles au moins l'armature secondaire (23a) est dotée d'un insert élastomère (23e) ;

e) l'armature primaire (22a) est prévue à titre d'élément de commutation pour la vanne de mise à l'air (22) et l'armature secondaire (23a) est prévue à titre d'élément de commutation pour la vanne de purge d'air (23) ;

f) en l'absence de courant dans la bobine magnétique (11) l'armature primaire (22a) de la vanne de mise à l'air (22) tout comme l'armature secondaire (23a) de la vanne de purge d'air (23) se trouvent dans leurs positions de base définies par la charge du ressort ;

g) par alimentation d'un premier courant magnétique traversant la bobine magnétique (11) et d'une intensité prédéterminée ($I_1$), l'armature primaire (22a) de la vanne de mise à l'air (22) est amenée dans sa position de commutation déterminée par la force magnétique, tandis que l'armature secondaire (23 a) de la vanne de purge d'air (23) demeure dans sa position de base chargée par ressort ;

h) par alimentation d'un second courant magnétique traversant la bobine magnétique (11) et d'une intensité prédéterminée ($I_2$), qui est supérieur d'un montant prédéterminé ($\Delta I$) au premier courant magnétique ($I_1$), l'armature primaire (22a) de la vanne de mise à l'air (22) tout comme l'armature secondaire (23a) de la vanne de purge d'air (23) sont amenées dans leurs positions de commutation déterminées par la force magnétique ;

i) l'armature primaire (22a) et l'armature secondaire (23a) sont agencées dans un circuit magnétique commun (3) dans lequel le flux magnétique est engendré par le courant magnétique (I) qui traverse la bobine magnétique (11) et dans lequel le flux magnétique ($\Phi2$) dans l'armature secondaire (23a) est réduit par rapport au flux magnétique ($\Phi1$) dans l'armature primaire (22a).

2. Système de commande de vanne pneumatique selon la revendication 1, **caractérisé en ce que**, en abaissant un courant magnétique traversant la bobine magnétique (11) depuis l'intensité du second courant magnétique d'intensité prédéterminée ($I_2$) à un troisième courant magnétique d'une intensité prédéterminée ($I_3$) l'armature secondaire (23a) de la vanne de purge d'air (23) est amenée dans sa position de base chargée par ressort, tandis que l'armature primaire (22a) de la vanne de mise à l'air (22) demeure dans sa position de commutation déterminée par la force magnétique.

3. Système de commande de vanne pneumatique selon la revendication 1 ou 2, **caractérisé en ce que** l'armature primaire (22a) tout comme l'armature secondaire (23a) sont dotées d'un insert élastomère (22e, 23e), et les deux armatures sont réalisées identiques l'une par rapport à l'autre.

4. Système de commande de vanne pneumatique selon l'une au moins des revendications 1 à 3, **caractérisé en ce qu'**il est prévu à titre d'unité pilote (1) pour deux circuits de régulation de pression de freinage, à savoir un premier et un second circuit de régulation de pression de freinage d'une installation de freinage sous pression électronique/pneumatique, dans laquelle la vanne magnétique à 3 voies/2 positions (21) est réalisée sous forme de vanne à redondance, et à la première entrée (4) de la vanne magnétique à 3 voies/2 positions (21) est appliquée une pression d'alimentation, et à la seconde entrée (5) de la vanne magnétique à 3 voies/2 positions (21) est appliquée une pression de redondance.

**5.** Système de commande de vanne pneumatique selon l'une des revendications 1 à 4, **caractérisé en ce que** la réduction du flux magnétique ($\Phi_2$) dans l'armature secondaire est réalisée par un court-circuit magnétique (20) agencé parallèlement à l'armature secondaire (23a).

**6.** Système de commande de vanne pneumatique selon l'une des revendications 1 à 4, **caractérisé par** les caractéristiques suivantes :

   a) au niveau de l'agencement de guidage d'armature commun (10) du dispositif modulateur aval (7), dans la région de l'armature primaire (22a) et dans la région de l'armature secondaire (23a), sont prévues des douilles-étriers (15, 16) en matériau ferromagnétique qui ont pour effet de focaliser le champ magnétique ;
   b) pour réaliser le court-circuit magnétique, la douille-étrier (16) prévue pour l'armature secondaire (23a) s'étend sur un tube de guidage d'armature (23r) pour l'armature secondaire (23a) sur une zone en longueur supérieure à la zone en longueur de la douille-étrier (15) pour l'armature primaire (22a) sur un tube de guidage d'armature (22r) pour l'armature primaire (22a).

**7.** Système de commande de vanne pneumatique selon l'une des revendications 1 à 5, **caractérisé en ce que**, pour réaliser le court-circuit magnétique, le tube de guidage d'armature (23r) prévu pour l'armature secondaire (23a) est réalisé au moins partiellement en matériau ferromagnétique.

**8.** Système de commande de vanne pneumatique selon l'une des revendications 1 à 5, **caractérisé en ce que**, pour réaliser le court-circuit magnétique, le tube de guidage d'armature (23r) prévu pour l'armature secondaire (23a) est réalisé comme une conformation cylindrique creuse sur une armature magnétique (12) agencée fermement dans l'agencement de guidage d'armature commun (10) entre l'armature primaire et l'armature secondaire (22a, 23a).

**9.** Système de commande de vanne pneumatique selon l'une au moins des revendications précédentes, **caractérisé par** les caractéristiques suivantes :

   a) il est prévu un noyau magnétique (12) en matériau ferromagnétique entre la zone de l'armature primaire (22a) et la zone de l'armature secondaire (23a) du noyau magnétique (12) en matériau ferromagnétique relié de manière fixe à l'agencement de guidage d'armature (10) ;
   b) au niveau de la délimitation du noyau magnétique (12) tournée vers l'armature secondaire (23a), il est prévu une plaque non-magnétique (25) en matériau non magnétique.

Fig.1

Redundanzbetrieb

Fig.2

EBS-Betrieb, Belüften

Fig.3

EBS-Betrieb, Druckhalten

Fig.4

EBS-Betrieb, Entlüften

Fig.5

ABS-Betrieb, Entlüften

Fig.6

ABS-Betrieb, Druckhalten

Fig.7

ABS-Betrieb, Belüften

Fig.8

A-A

Fig.9

Fig.10

Fig.11

Fig.12

B-B

Fig.13

B-B

Fig.14

Fig.15a

Allgemein

Fig.15c

Grundzustand

Fig.15c

Primäranker
geschaltet

Fig.15d

Primäranker und
Sekundäranker
geschaltet

Fig.16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10009116 A1
- DE 4227084 A1
- DE 2403770 A
- WO 03053758 A
- DE 3501708 A1
- DE 10113316 A1